**Europäisches Patentamt**

**European Patent Office**

**Office européen des brevets**

(19)

(11) Veröffentlichungsnummer : **0 145 876 B1**

## (12) EUROPÄISCHE PATENTSCHRIFT

(45) Veröffentlichungstag der Patentschrift :
07.09.88

(21) Anmeldenummer : **84112120.5**

(22) Anmeldetag : **10.10.84**

(51) Int. Cl.⁴ : **E 02 B 15/04**

---

(54) **Vorrichtung zum Entfernen von Öl auf Wasseroberflächen.**

---

(30) Priorität : **17.12.83 DE 3345769**

(43) Veröffentlichungstag der Anmeldung :
**26.06.85 Patentblatt 85/26**

(45) Bekanntmachung des Hinweises auf die Patenterteilung : **07.09.88 Patentblatt 88/36**

(84) Benannte Vertragsstaaten :
**AT BE CH DE FR GB IT LI LU NL SE**

(56) Entgegenhaltungen :
**EP-A- 0 005 122**
**CH-A-  565 905**
**DE-A- 3 002 694**
**FR-A- 2 530 215**
**US-A- 4 172 036**

(73) Patentinhaber : **Ralf F. Piepho Abwassertechnik GmbH**
**Rittergut 2**
**D-3015 Wennigsen 5 (DE)**

(72) Erfinder : **Piepho, Ralf F.**
**Rittergut 2**
**D-3015 Wennigsen 5 (DE)**

(74) Vertreter : **Rücker, Wolfgang, Dipl.-Chem.**
**Hubertusstrasse 2**
**D-3000 Hannover 1 (DE)**

EP 0 145 876 B1

## Beschreibung

Die Erfindung betrifft eine Vorrichtung zur Entfernung von auf Wasseroberflächen schwimmenden Ölschichten, bei denen ein Schwimmkörper vorhanden ist, der an Armen herausragend vertikal stehende rotierende Scheiben trägt, die in das Wasser eintauchen und das darauf schwimmende Öl mitnehmen, welches Abstreifer von den Scheiben abstreifen, so daß es einem Sammelbehälter zufließt.

Aus der DE-A-30 172 93 ist es bekannt, solche Vorrichtungen zur Entfernung von auf Wasserflächen schwimmenden Ölschichten einzusetzen, wobei diese rotierenden Scheiben, die man auch als Skimmer bezeichnet, in Traggestellen in Form von Auslegern beiderseits eines Schiffes angeordnet sind. Solche Ölskimmer sind an sich bekannt. Sie werden motorisch angetrieben und das abgestreifte Öl fließt über Schläuche oder Rohrleitungen zu einem Sammelbehälter. Beschrieben sind derartige Vorrichtungen z. B. in der Schweizer Patentschrift 541 039 oder in der französischen Patentschrift 1 530 786. Eine schwimmende Vorrichtung ähnlicher Art ist auch beschrieben in der US-A-4 172 036 und die besondere Ausbildung der Scheiben und des Sammelbehälters für das Öl in der DE-C-30 02 694.

Bei der Durchsicht dieser Druckschriften zeigt es sich, daß die rotierenden Scheiben wie in den beiden erstgenannten, entweder hinter oder neben einem schwimmenden Fahrzeug angeordnet sind oder fest installiert sind in einem Wasserlauf oder dergleichen, von dem aus die Scheiben mit Energie versorgt werden und die das abgeskimmte Öl oder dergleichen aufnehmen, was die Scheiben von der Wasseroberfläche abskimmen.

Auch die französische Patentschrift 1 530 786 zeigt eine solche fest installierte Skimmervorrichtung, während sich die DE-A-30 02 694 im wesentlichen mit der Ausbildung der Scheibe befasst, zeigt die US-A-4 172 036 ebenfalls ein Gebilde ähnlich dem der oben genannten Schweizer Patentschrift, wobei jedoch eine Vervielfachung der Zahl der Scheiben vorgesehen ist, die jeweils zwischen Schwimmern gelagert sind, so daß sich ein einheitliches, festes, endliches Gebilde ergibt, das von einer getrennten Stelle aus, sei es Land oder Schiff, mit Energie versorgt wird und die abgeskimmte Öl aufnimmt.

Bei all diesen bekannten Vorrichtungen handelt es sich um feste Einrichtungen, die endgültig in ihrer Ausgestaltung konzipiert sind und von denen das abgeskimmte Öl oder dergleichen immer über eine Schlauchleitung abgeführt werden muß oder ein Sammelbehälter endlicher Größe zur Verfügung steht. Die Vorrichtungen zum Entfernen von Öl oder dergleichen welches auf der Wasseroberfläche schwimmt, kann also nur in Zusammenwirkung von mehreren solcher endlicher Einheiten und den dazugehörigen Versorgungs- und Entsorgungsfahrzeugen- oder Stationen eingesetzt werden.

Der vorliegenden Erfindung liegt daher die Aufgabe zugrunde, eine Vorrichtung zu schaffen, um die auf Wasserflächen schwimmenden Ölschichten zu entfernen, die außerordentlich anpassungsfähig ist an das Ausmaß, bzw. die Menge des zu entfernenden Öls oder dergleichen, die autark ist, sich also mit Energie usw. selbst versorgt, anpassungsfähige Sammelräume für abgeschöpftes Öl aufweist und die sich auch in Form einer Sperre oder Barriere, praktisch beliebiger Gestalt, anwenden läßt.

Gelöst wird diese Aufgabe durch eine schwimmende Vorrichtung der eingangs beschriebenen Art, wobei der Schwimmkörper aus einer Anzahl untereinander verbindbarer Behälter (7 und 8), trapezförmigen Horizontal-Querschnitts, und offener schüsselförmiger Elemente (32), ebenfalls trapezförmigen Horizontal-Querschnitts, an denen Tragarme (16, 17) zur Aufnahme der Skimmerscheibe (19) ausgebildet sind, besteht.

Die einander zugeneigten Seiten des Trapezes bilden vorzugsweise einen Winkel von 45° mit der Grundseite, jedoch sind auch andere Winkel möglich.

Diese Behälter, die praktisch in jeder beliebigen Abmessung herstellbar sind, sind wie oben erwähnt, mit Verbindungsflanschen versehen und bilden Schwimmkörper für die Scheibenskimmer und können miteinander an den Flanschen unter Einfügung von Dichtungsstreifen verschraubt werden und zwar nebeneinander, als auch übereinander, so daß sich Säulen und Wände ergeben.

Durch die Anordnung zweier gegenüberliegender Seitenwände unter Winkeln von 45°, kann man durch jeweilige Umkehrung des nächst folgenden Behälters und durch Anordnung nebeneinander und übereinander, Wände aus solchen Behältern errichten. Man kann aber auch durch Aneinanderfügung einer bestimmten Anzahl von Behältern in jeweils umgekehrter Stellung erst eine gerade Wand erzeugen, dann durch Anfügung eines Behälters in gleicher Lage eine Ecke bilden und dann wieder gewendete Behälter anfügen usw., so daß man praktisch zu jeder beliebigen Anordnungsform dieser Behälter kommt, beispielsweise zu einem geschlossenen polygonalen, zylindrischen Körper, mit annähernd kreisförmiger Gestalt, aber auch zu ovalen oder dreieckigen geschlossenen Körpern.

Durch die Anordnung einer beliebigen Zahl von Behältern übereinander kann der Körper über eine bestimmte Tiefe eintauchen wobei das Ausmaß der Eintauchung durch Einlassen von Ballastwasser geregelt wird.

An den mit Tragarmen versehenen schüsselförmigen Elementen die jeweils die obere Schicht des Schwimmkörpers bilden, werden die Scheibenskimmer gelagert. Diese Scheibenskimmer können beträchtliche Durchmesser haben und deshalb ist die Tragweite der Arme der schüsselförmigen Elemente je nach Durchmesser der verwendeten Skimmerscheiben ausgeführt.

Die Skimmerscheiben können einen Durchmesser von beispielsweise drei oder gar vier Metern haben und tauchen etwa zu einem viertel bis zu einem drittel in das Wasser ein. In dem Schwimmkörper sind schließlich enthalten die Stromquellen oder sonstige Brennstoffquellen, die die Antriebeseinrichtungen versorgen, die vorzugsweise hydraulische Motoren sind, die von einer zentralen Drucköl erzeugenden Einrichtung mit Drucköl versorgt werden.

In der bevorzugten erfindungsgemäßen Ausgestaltung ist der Schwimmkörper von geschlossener, kreisförmiger oder ovaler zylindrischen Grundgestalt, wenngleich der Schwimmkörper aufgrund seines Aufbaus aus würfelförmigen Behälten mit trapezförmigem Querschnitt, ein vieleckiges Gebilde ist.

Das schüsselförmige Element, an dem die Tragarme für die Scheibenskimmer angeordnet sind, ist offen, auch in zwei Seitenwänden. Es ist auf der oberen Seite der Ölskimmer befestigt, das von den Scheiben abgeskimmte Öl strömt in bekannter Weise in den Innenraum des schüsselförmigen Elementes und verläßt dies wieder, um sich im Innenraum des Schwimmkörpers anzusammeln, denn der Innenraum des Schwimmkörpers bildet im erfindungsgemäßen Sinne den Sammelraum für das von der Wasseroberfläche abgeskimmte Öl. Die sich im Laufe des Abskimmprozesses bildende Ölschicht steigt im Inneren des zylindrischen Schwimmkörpers zunächst um einen beträchtlichen Betrag an, um dann zur Folge ihres Gewichts eine entsprechende Menge Wasser nach unten herauszudrücken.

Der Unterschied in den spezifischen Gewichten wird bei der Errichtung und der Belastung des geschlossenen Schwimmkörpers berücksichtigt, damit eine ausreichende Säule abgeskimmten Öls oder dergleichen innerhalb des geschlossenen Schwimmkörpers aufrechterhalten werden kann. Die Anzahl von Ölskimmern richtet sich natürlich nach der Größe des Schwimmkörpers, aber es ist praktisch möglich, für jeden Behälter in der Wand des schwimmenden Körpers einen Ölskimmer anzuordnen.

Die Abmessung der Behälter und der Skimmer ist praktisch an keine Größe gebunden, sondern bestimmt sich nach praktischen Erwägungen, hinsichtlich der Handhabung, des Einsatzes und des Ortes oder des Verwendungszwecks. Sind am oberen Rand des geschlossenen ringförmigen oder ovalen Schwimmkörpers nur einige Ölskimmer befestigt, so können die Zwischenräume durch in ihrer Form und ihren Abmessungen entsprechende Behälter geschlossen werden, wobei sich diese Behälter praktisch nur in ihren Abmessungen von jenen Behältern unterscheiden, die den Schwimmkörper bilden, wenngleich in erster Linie die Verwendung einzelner solcher Schwimmkörper mit einer Vielzahl von auf dem umfang angeordneten Ölskimmern gedacht ist, so ist es auch möglich, mehrere geschlossene Schwimmkörper kreisförmiger oder ovaler Gestalt, miteinander zu verbinden, so daß eine Barriere entsteht, beispielsweise als Abschluß vor einem Hafenbecken oder in einer Anordnung, um eine Bohrstelle herum, sei es auf See, sei es auf einem Binnengewässer.

Andererseits läßt sich dieses großdimensionierte Gebilde in viele einzelne Teile zerlegen und leicht transportieren. Aufgrund des sich ergebenden großen Innenraumes kann eine solche erfindungsgemäße Vorrichtung für viele Tage oder gar Wochen, ortsfest verankert die Tätigkeit der Entfernung von Öl auf Wasseroberflächen ausüben, beispielsweise in Krisen- oder Gefahrensituationen, wie beispielsweise unlängst bei der Zerstörung der Bohrstelle im Persischen Golf. Ein kleinerer Öltanker kann von Vorrichtung zu Vorrichtung fahren und das im Inneren schwimmende abgeskimmte Öl abpumpen, es können Wartungsarbeiten durchgeführt werden usw.

Das im Innenraum der zylindrischen Vorrichtung sich ansammelnde Öl wird von dem nachdrückenden Wasser hochbefördert. Beim Abpumpen des abgeskimmten Öls und bei der Ausführung der Wartungsarbeiten können Brennstoffe und dergleichen ergänzt werden. Die Vorrichtung ist wie allgemein üblich, bei ihrer Verwendung im Meer oder in Binnenseen mit den vorgeschriebenen Signal- und Warneinrichtungen ausgestattet und mit Einrichtungen zur Verankerung.

Die Erfindung wird nun anhand von Ausführungsbeispielen näher erläutert. In der Zeichnung stellen dar :

Fig. 1 eine Seitenansicht im Schnitt der erfindungsgemäßen Vorrichtung zur Entfernung von Öl auf Wasserflächen,

Fig. 2a-c perspektivische Ansichten der drei Bauelemente der Vorrichtung,

Fig. 3 ist eine Draufsicht auf die Vorrichtung nach Fig. 1 teilweise im Schnitt und

Fig. 4 eine alternative Ausbildung einer Flanschverbindung.

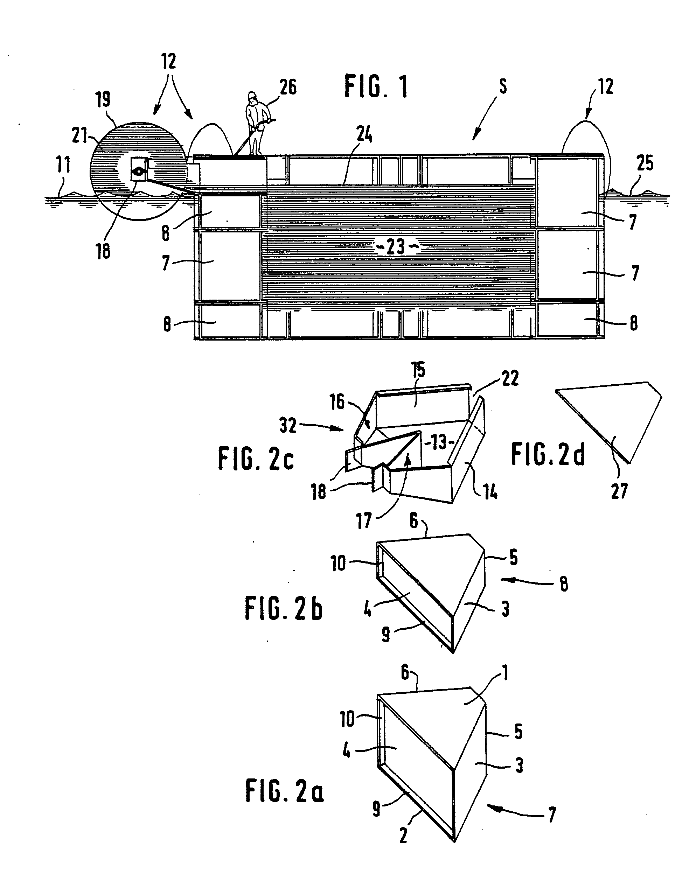

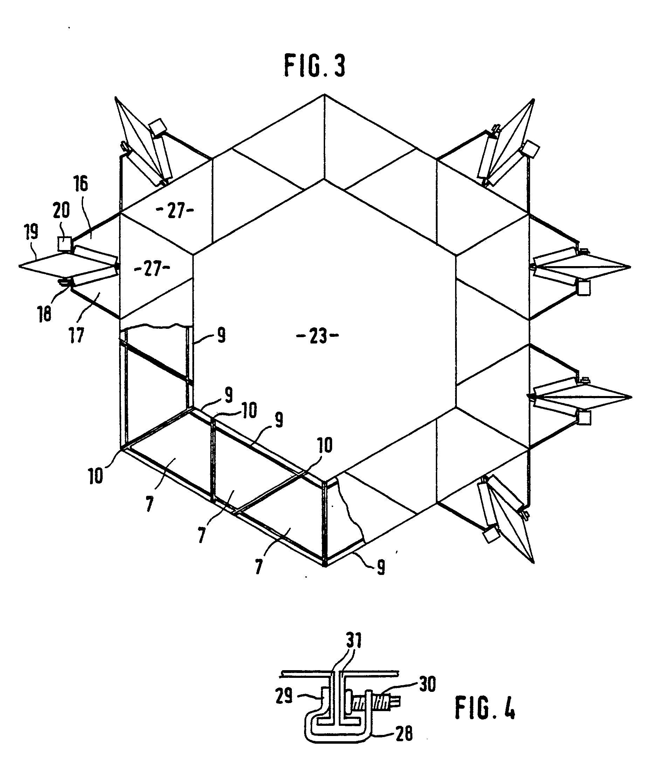

Nach Fig. 1 und 3 ist die Vorrichtung in diesem Ausführungsbeispiel von geschlossener, polygonaler, ringförmiger Gestalt und bildet praktisch ein kurzes, rohrförmiges Stück, dessen Wandung aus einzelnen Behältern gem. Fig. 2a und b hergestellt ist. Diese Behälter nach Fig. 2a und b sind im Querschnitt trapezförmige Behälter, wobei die Ränder der Trapezseiten unter gleichen Winkeln zur Längsmittellinie geneigt sind und die übrigen Seiten des Behälters, wie 3, 4, 5 und 6, können, was auch für die anderen Seiten (1 und 2) gilt, je nach Form und Größe des Behälters rechteckig oder quadratisch sein. Diese verschiedene Formgebung ist schon im Vergleich zu dem Behälter in Fig. 2b erkennbar, dort handelt es sich um einen recht flachen Behälter, so daß die Seiten 3, 4 und 6 rechteckige Gestalt haben, während die Seite 5 quadratisch oder fast quadratisch sein kann, was widerum von den Abmessungen der Trapezseiten 1 und 2 abhängt, bzw. deren Winkel. Wichtig ist lediglich, daß diese Behälter so ausgestaltet sind, daß sie zueinander passen, d. h., übereinander stapelbar sind, wozu die Trapezseiten 1 und 2 entsprechend gleiche Abmessungen haben müssen, was sich wiederum aus Fig. 1 und 3 ergibt. Wie aus Fig. 1 ersichtlich, ist der polygonale, ringförmige Schwimmkörper aus Behältern nach Fig. 2a und 2b aufgebaut, die Behälter 2a sind in Fig. 1 mit dem Bezugszeichen 7 bezeichnet und die Behälter 2b mit dem Bezugszeichen 8.

Aus Fig. 2a und 2b ergibt sich ferner, daß die Ausgestaltung der Behälter so getroffen ist, daß sie an den Rändern ihrer Trapezseiten, die praktisch Decke, bzw. Boden der Behälter bilden, mit Flanschen versehen sind, was bei 9 und 10 deutlich zu erkennen ist und an den übrigen Rändern nur angedeutet ist. Diese Flansche enthalten Löcher, derart, daß beim Übereinanderstapeln der Behälter 2a und 2b die Löcher fluchten und Mutterschrauben beispielsweise hindurchgesteckt werden können, mit denen die Behälter fest miteinander verschraubbar sind, durch Übereinanderstapeln ergeben sich diese polygonalen Gebilde nach Fig. 1 und 3. Es können jedoch auch gerade, durchlaufende Wände errichtet werden oder ovale und sonstige Gebilde, je nachdem für welchen Zweck die Vorrichtung eingesetzt werden soll.

Diese in Fig. 2 und 3 dargestellte Vorrichtung ist praktisch ein kurzes Rohrstück mit einer polygonalen, relativ dicken Wandung und trägt an ihrem oberen Rand die eigentliche Vorrichtung zum Abschöpfen der Ölschicht von der Wasseroberfläche, die gestrichelt bei 11 (Fig. 1) dargestellt ist, nämlich die mit dem Bezugszeichen 12 bezeichneten Skimmer an sich bekannter Bauart.

Zur Anbringung solcher Skimmerscheiben dient das in Fig. 2c gezeigte Teil, welches ebenfalls eine trapezförmige Wand 13 umfaßt, mit Seitenwänden 14 und 15 und kragarmförmig herausragenden Teilen 16 und 17, zwischen deren plattenförmigen Enden 18 die Skimmerscheiben 19 gelagert sind.

Diese Skimmerscheiben können einfache, kreisförmige Blechscheiben sein oder auch doppelkegelförmige Hohlkörper, die mit ihren Basisrändern aufeinander liegen und die in an sich bekannter Weise beispielsweise hydraulisch über einen Hydraulikmotor 20 angetrieben werden. Seitlich an den Scheiben angeordnete Abstreifer streifen den Ölfilm 21 von den Scheiben ab, das Öl fließt durch das Behälterteil 2c, das an seinem hinteren Ende bei 22 offen ist und gelangt schließlich in den mittleren Innenraum 23 des kreisringförmigen Schwimmers, der aus diesen vielen Behältern zusammengesetzt ist und sammelt sich dort an.

Der kreisringförmige Schwimmer, der in Fig. 1 generell mit dem Bezugszeichen « S » bezeichnet ist, ist nun in seiner Schwimmlage so eingestellt, daß das Öl im Inneren des Schwimmers Aufnahme findet, sich dort ansammelt und das Behälter befindliche Wasser nach und nach nach unten hinausdrängt, was Fig. 1 in dieser Deutlichkeit nicht unbedingt erkennen läßt.

Der Pegel des abgeschöpften Öls 24 liegt jedoch höher als die Wasseroberfläche, die bei ruhiger See etwa im Wellental bei 25 liegt.

Diese Einjustierung der Schwimmlage der Behälter ist durch entsprechendes Fluten einiger oder mehrerer der Behälter des kreisringförmigen

Gebildes nach Fig. 1 und 3 erreichbar. Das Teil, an dem die Skimmerscheiben 21 angeordnet sind, und das in Fig. 2c dargestellt ist, kann durch einen entsprechenden Deckel 27, der in Fig. 2d gezeigt ist, abgedeckt werden, so daß nur Teile der Kragarme frei herausragen, in die das abgestreifte Öl der Scheibe 19 hineinfließt. Bei 26 ist ein Mensch dargestellt, der irgendwelche Funktionen ausübt.

In Fig. 3 ist nur ein solcher Ölskimmer mit Bezugszeichen versehen, weil die anderen gezeigten ganz identisch ausgebildet sind. Das Bezugszeichen 9 in Fig. 3 bezeichnet die horizontal liegenden Flansche, mit denen die Behälter untereinander verbunden sind, die vertikal verlaufenden Flansche 10 sind ebenfalls angedeutet.

Die Vorrichtung gemäß der vorliegenden Erfindung, ist darüber hinaus, je nach Einsatzort mit entsprechenden Einrichtungen versehen, beispielsweise Pollern und Befestigungsklampen, um die Vorrichtung an Leinen und Seilen oder dergleichen zu befestigen, die am Meeresboden zu Kaianlegen usw. verankert sind.

Die Behälter 2a und 2b können natürlich auch aus einzelnen Teilen aufgebaut sein, die miteinander verschraubt sind oder aus einfachen Blechen bestehen, die an rahmenförmigen Gebilden befestigt sind, die gleichzeitig die Befestigungsflansche 9 und 10 bilden.

Anstatt die Behälter aus Blech oder Metall zu fertigen, können sie auch aus sogenanntem Ferrobeton hergestellt sein, ein Eisenbeton, wie er auch zur Herstellung und zum Bau von Schiffen verwendet wird.

Die Skimmerscheiben 19 können jede praktische Größe haben und auch jede Ausgestaltung, entweder in Form einer einfachen Blechscheibe oder als Hohlkörper. Der baukastenartige Aufbau von Schwimmkörpern, praktisch jeder beliebigen Gestalt, hat den außerordentlichen Vorteil, daß nur wenige Grundelemente von Nöten sind, diese Grundelemente in ihrer Herstellung einfach sind und bereits mit einem Minimum an elementaren Werkzeugen hergestellt werden können, selbst die Skimmer lassen sich so schaffen.

Komplizierter ist lediglich der Antrieb der Scheiben, aber auch der kann in baukastenartiger Weise oder in Form eines Bausatzes vorliegen.

Die erfindungsgemäßen Vorrichtungen bedürfen keiner ständigen Überwachung und sind insbesondere dort einsetzbar, wo oberflächliche Verschmutzungen des Meeres auftreten, beispielsweise bei Strandungen oder bei vorübergehend nicht abdichtbaren Ölaustritten an Bohrtürmen, Vorratslager oder Verladeanlagen im freien Wasser. Es kann so zum Beispiel eine ringartige Wand um einen Bohrturm errichtet mit mit innenliegenden Skimmerscheiben verwendet werden, wobei die Skimmerscheiben in einen Behälter fördern, der nun seinerseits wieder angeflanscht ist an die äußere Wand eines solchen Ringes.

Die einzelnen Behälter können je nach Einsatzgebiet und nach Größe unter Einfügung elastischer Dichtungselemente zusammengeschraubt werden.

Anstatt die Flansche als glatte Flansche mit Bohrungen zum Durchstecken von Mutterschrauben auszubilden, können die Flansche auch L-förmige Gestalt haben, d. h., an ihrem äußeren Rand noch einmal nach innen zur Behälterinnenfläche abgewinkelt sein, so daß die Verbindung der Flansche nunmehr durch Aufsetzen von Klammern erfolgen kann, ohne daß die Gefahr besteht, daß die Klammern nach außen abrutschen.

Eine solche Flanschverbindung ist beispielsweise dargestellt in Fig. 4. Die Klammer hat dort das Bezugszeichen 28, sie besteht aus einem etwa C-förmigen Teil, wovon das eine Ende ein Widerlager 29 bildet und das andere Ende einen Gewindezapfen 30 enthält, der über einen Mehrkant bewegbar ist. Die im Querschnitt L-förmigen Flansche sind bei 31 dargestellt.

**Patentansprüche**

1. Vorrichtung zur Entfernung von auf Wasseroberflächen schwimmenden Ölschichten mit einem Schwimmkörper (S), der an herausragenden Armen (16, 17) vertikal stehende, rotierende Scheiben (19) trägt, die in das Wasser eintauchen und das darauf schwimmende Öl mitnehmen und einem Sammelbehälter zuführen, dadurch gekennzeichnet, daß der Schwimmkörper (S) aus einer Anzahl untereinander verbindbarer Behälter (7 und 8), trapezförmigen Horizontal-Querschnitts, und offener schüsselförmiger Elemente (32), ebenfalls trapezförmigen Horizontal-Querschnitts, an denen Tragarme (16 und 17) zur Aufnahme der Skimmerscheibe (19) ausgebildet sind, besteht.

2. Vorrichtung nach Anspruch 1, dadurch gekennzeichnet, daß die Behälter (7 und 8) und das schüsselförmige. Element (32) unterschiedlicher Abmessung sind, jedoch einem Rastermaß entsprechen.

3. Vorrichtung nach Anspruch 1 und 2, dadurch gekennzeichnet, daß die einander zugeneigten Seiten (3, 14 und 15) des Trapezes vorzugsweise einen spitzen Winkel mit der Grundseite bilden.

4. Vorrichtung nach Anspruch 3, dadurch gekennzeichnet, daß der Winkel der Trapezseiten der Behälter (7 und 8) und des Elementes (32) vorzugsweise einen Winkel von 45° mit der Grundseite bilden.

5. Vorrichtung nach Anspruch 1-4, dadurch gekennzeichnet, daß die Ränder (9 und 10) der Behälter (7 und 8) mit, mit Bohrungen versehenen Flanschen (9 und 10) versehen sind oder L-förmige Flansche (31), die mit Klammern (28) verbindbar sind, aufweisen.

6. Vorrichtung nach Anspruch 1-5, dadurch gekennzeichnet, daß die Behälter (7 und 8) aus Stahlblech gefertigt sind.

7. Vorrichtung nach Anspruch 1-5, dadurch gekennzeichnet, daß die Behälter (7 und 8) aus einzelnen Teilen, wie Seitenwandblechen und diese verbindenden Rahmen, auseinandernehmbar aufgebaut sind.

8. Vorrichtung nach Anspruch 1-7, dadurch gekennzeichnet, daß die Vorrichtung aus einzelnen Behältern (7 und 8) und schüsselförmigen Elementen (32) zu kreisringförmigen, polygonalen Schwimmkörpern aufgebaut ist, deren Innenraum (23) Sammelbehälter für das abzuschöpfende Öl ist.

9. Vorrichtung nach Anspruch 1-7, dadurch gekennzeichnet, daß der Schwimmkörper aus einzelnen Behältern (7 und 8) aufgebaut ist und kreisringförmige und/oder gerade miteinander verbindbare Schwimmkörper darstellt.

**Claims**

1. Apparatus for removing oil layers floating on water surfaces, comprising a floating body (S) which carries, on projecting arms (16, 17), vertical revolving discs (19), which are partly immersed in the water and pick up the oil floating thereon and feed it to a collecting container, characterized in that the floating body (S) consists of a plurality of containers (7 and 8), of trapezium-shaped horizontal cross-section and capable of being connected to one another, and of open, dish-shaped elements (32), also of trapezium-shaped horizontal cross-section, on which supporting arms (16 and 17) for carrying the skimmer disc (19) are constructed.

2. Apparatus according to Claim 1, characterized in that the containers (7 and 8) and the dish-shaped element (32) are of different dimensions, but correspond to a grid dimension or module.

3. Apparatus according to Claims 1 and 2, characterized in that the mutually converging sides (3, 14 and 15) of the trapezium preferably make an acute angle with the base side.

4. Apparatus according to Claim 3, characterized in that the trapezium sides of the containers (7 and 8) and of the element (32) preferably make an angle of 45° with the base side.

5. Apparatus according to Claims 1 to 4, characterized in that the edges (9 and 10) of the containers (7 and 8) are furnished with flanges (9 and 10) equipped with bores or possess L-shaped flanges (31), which can be connected together by clamps (28).

6. Apparatus according to Claims 1 to 5, characterized in that the containers (7 and 8) are made from steel sheet.

7. Apparatus according to Claims 1 to 5, characterized in that the containers (7 and 8) are built up from individual parts, such as side wall plates and frames connecting these together, in a manner permitting dismantling.

8. Apparatus according to Claims 1 to 7, characterized in that the apparatus is built up from individual containers (7 and 8) and from dish-shaped elements (32) to annular, polygonal floating objects, the internal space (23) of which is a collecting container for the oil to be skimmed off.

9. Apparatus according to Claims 1 to 7,

characterized in that the floating object is built up from individual containers (7 and 8) and constitutes annular and/or straight floating objects which can be connected together.

## Revendications

1. Dispositif pour enlever les couches d'huile flottant sur la surface de l'eau, avec un corps flottant (8), lequel porte des disques tournants (19), disposés verticalement sur des bras en saillie (16, 17), disques qui plongent dans l'eau et entraînent l'huile qui flotte sur cette dernière, pour l'envoyer à un bac collecteur, caractérisé en ce que le corps flottant (S) est constitué d'un certain nombre de bacs (7 et 8), pouvant être assemblés les uns aux autres, de section horizontale trapézoïdale, et d'éléments ouverts en forme d'auge (32), eux-mêmes ayant une section horizontale trapézoïdale, et sur lesquels sont disposés des bras de soutènement (16, 17) destinés à recevoir le disque racleur (19).

2. Dispositif selon la revendication 1, caractérisé en ce que les bacs (7 et 8) et l'élément en forme d'auge (32) ont des dimensions différentes, mais correspondent à une dimension modulaire.

3. Dispositif selon les revendications 1 et 2, caractérisé en ce que les côtés du trapèze (3, 14 et 15) dirigés les uns vers les autres forment de préférence un angle aigu avec la base.

4. Dispositif selon la revendication 3, caractérisé en ce que l'angle compris entre les côtés des trapèzes des bacs (7 et 8) et de l'élément (32) d'une part, la base d'autre part, est de préférence de 45°.

5. Dispositif selon les revendications 1-4, caractérisé en ce que les bords (9 et 10) des bacs (7 et 8) sont pourvus de brides (9 et 10) possédant des alésages, ou encore de brides en forme de L (31), pouvant être assemblées par des crampons (28).

6. Dispositif selon les revendications 1-5, caractérisé en ce que les bacs (7 et 8) sont construits en tôle d'acier.

7. Dispositif selon les revendications 1-5, caractérisé en ce que les bacs (7 et 8) sont constitués de pièces individuelles, comme par exemple des tôles de paroi latérale et les cadres qui les assemblent, de façon à pouvoir être détachés les uns des autres.

8. Dispositif selon les revendications 1-7, caractérisé en ce que ce dispositif est constitué de récipients individuels (7 et 8) et d'éléments en forme d'auge (32) pour donner des corps flottants circulaires et polygonaux, dont l'espace intérieur (23) est le bac collecteur de l'huile raclée.

9. Dispositif selon les revendications 1-7, caractérisé en ce que le corps flottant est constitué de plusieurs bacs individuels (7 et 8), et représente des corps flottants circulaires et/ou rectilignes, pouvant être assemblés les uns aux autres.

FIG. 1

FIG. 2c

FIG. 2d

FIG. 2b

FIG. 2a

## FIG. 3

## FIG. 4